# EUROPEAN PATENT APPLICATION

(11) **EP 4 803 229 A1**
(43) Date of publication of application: **09.09.2026**
(21) Application number: 25225079.0
(22) Date of filing: 18.12.2025
(51) Int. Cl.: B22F 10/28, B22F 12/45, B33Y 10/00, B33Y 30/00, B33Y 50/02, B22F 12/90

(54) **IN-SITU DETECTION FOR LASER STITCHING MISALIGNMENT**

(30) Priority: 03.03.2025 US 202519068470
(71) Applicant: General Electric Company, Cincinnati, Ohio 45215 (US)
(72) Inventor: ILLOUZ, Kati, Evendale, 45215 (US); VASIL, Christina, Evendale, 45215 (US); OSTROVERKHOV, Victor, Evendale, 45215 (US); IMMER, Christopher, Evendale, 45215 (US)
(74) Representative: Openshaw & Co.

(57) **Abstract**

An apparatus (300) may include processors (305), memory modules (340), and machine-readable instructions stored in the memory modules (340). When executed by the processors (305), the instructions may cause the apparatus (300) to receive build data associated with a part (122) to be built by an additive manufacturing machine (100) using two or more lasers, wherein a first portion (402) of the part (122) is to be built by a first laser (120) and a second portion (404) of the part (122) is to be built by a second laser (121), identify a contour of the part (122) based on the build data, receive image data of a layer of the part (122) while the part is being built by the additive manufacturing machine (100), identify pixel locations of an edge of the part (122) based on the image data, determine distances between the pixel locations of the edge and the contour, and determine misalignment between the two or more lasers based on the determined distances.

## Description

### FIELD

The present disclosure relates to additive manufacturing, and more specifically, to in-situ field detection for laser stitching alignment.

### FEDERALLY SPONSORED RESEARCH STATEMENT

The present invention was made with Government support from the National Institute of Standards and Technology under Award Number 70NANB22H087. The Government has certain rights in the invention.

### BACKGROUND

Direct metal laser melting (DMLM) is an additive manufacturing process that uses lasers to melt ultra-thin layers of metal powder to build a three-dimensional object or part. During operation of a DMLM machine including a plurality of lasers, one or more of the lasers may become misaligned with respect to one or more of the other lasers. If this happens, material anomalies may be introduced into the part being built.

### BRIEF DESCRIPTION OF THE DRAWINGS

FIG. 1 schematically depicts an example additive manufacturing machine for building a part by additive manufacturing, according to one or more embodiments shown and described herein;
FIG. 2 schematically depicts a system for performing in-situ field detection for laser stitching alignment, according to one or more embodiments shown and described herein;
FIG. 3 schematically depicts the computing device of FIG. 2, according to one or more embodiments shown and described herein;
FIG. 4 depicts example image data that may be captured by the system of FIG. 2, according to one or more embodiments shown and described herein;
FIG. 5A depicts the example image data of FIG. 4, according to one or more embodiments shown and described herein;
FIG. 5B depicts the example image data of FIG. 4 after performing image denoising, according to one or more embodiments shown and described herein;
FIG. 6A depicts an upper left portion of the example image data of FIGS. 4 and 5A, according to one or more embodiments shown and described herein;
FIG. 6B depicts the example image data of FIGS. 4 and 5A, according to one or more embodiments shown and described herein;
FIG. 6C depicts an upper right portion of the example image data of FIGS. 4 and 5A, according to one or more embodiments shown and described herein;
FIG. 7 depicts example distance data that may be computed by the computing device of FIGS. 2 and 3, according to one or more embodiments shown and described herein;
FIG. 8 depicts the example distance data of FIG. 7 along with example process limits, according to one or more embodiments shown and described herein;
FIG. 9 illustrates different example types of laser misalignment, according to one or more embodiments shown and described herein;
FIG. 10 depicts a flow diagram of an illustrative method for performing in-situ field detection for laser stitching alignment, according to one or more embodiments shown and described herein; and
FIG. 11 depicts a flow diagram of another illustrative method for performing in-situ field detection for laser stitching alignment, according to one or more embodiments shown and described herein.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The term "coupled" refers to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The present disclosure generally relates to in-situ detection for laser stitching misalignment for additive manufacturing. In the illustrated example, the present disclosure relates to direct metal laser melting (DMLM). However, in other examples, the present disclosure may be utilized with other types of additive manufacturing, such as, for example, material extrusion, electron beam powder bed fusion, and the like.

Direct metal laser melting (DMLM) is an additive manufacturing process that uses lasers to melt ultra-thin layers of metal powder to build a three-dimensional object or part. During operation of a DMLM machine including two or more lasers, one or more of the lasers may become misaligned with respect to one or more of the other lasers. If this happens, material anomalies may be introduced into the part being built.

Computer-aided design (CAD) software may be used to design a three-dimensional part. An output file generated by the CAD software may then be converted into a plurality of slice files representing different layers of the part. The slice files are then loaded onto a DMLM machine for building the part.

During operation, a recoater moves across a build platform and evenly spreads a thin layer of fine metal powder. A laser then melts the powder to form a cross-section of the part for one layer based on a slice file. The build platform is then lowered and the process is repeated for the next layer of the part. In some examples, a DMLM machine may include a plurality of lasers. Each laser may operate over different portions of the build platform. As such, a part to be built may be stitched together from multiple sections, with each laser being used to build a different section. This may allow for larger parts to be built than may be possible using a single laser and/or allow for a quicker formation of parts relative to a single laser process.

However, if the plurality of lasers of the DMLM machine are misaligned with respect to one another, the part may not be properly stitched together. Accordingly, in embodiments disclosed herein, a sensor (e.g., a camera or photodiode) may capture spatial and temporal information about laser beam position in a build. Using the laser instruction file, a stitch zone between lasers can be determined and overlaid with the sensor data. The overlaid data can be used to determine whether the stitch zone determined by the sensor data matches the expected stitch zone based on the build file. It can then be determined whether the lasers are misaligned.

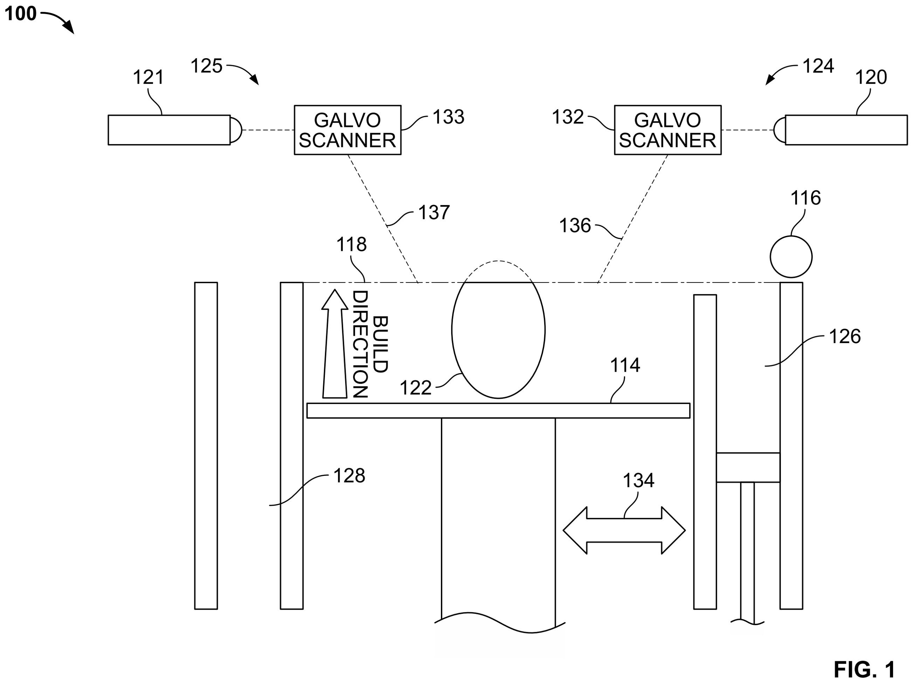

Turning now to the figures, FIG. 1 shows a schematic diagram of an illustrative apparatus for performing DMLM additive manufacturing. As used herein, the apparatus may be referred to as an additive manufacturing machine, or more specifically, a DMLM machine 100. The DMLM machine 100 builds objects, such as, for example, a part 122, in a layer-by-layer manner by sintering or melting a powder material using energy beams 136 and 137 generated by one or more sources such as, for example, laser 120 and 121. As explained above, a plurality of lasers may be used to build different sections of the part 122. In the example of FIG. 1, the DMLM machine 100 includes two lasers 120, 121. However, it should be understood that in other examples, the DMLM machine 100 may include more than two lasers. In addition, while the present disclosure relates primarily to in-situ detection for laser stitching misalignment using the DMLM machine 100, the various methods and processes described herein may also be implemented with another type of apparatus for additive manufacturing instead of the DMLM machine 100.

The powder to be melted by the energy beam is supplied by a reservoir 126 and is spread evenly over a build plate 114 using a recoater 116 (e.g., a recoater arm) traveling in a direction 134 to maintain the powder at a level of a build plane 118 and/or remove excess powder material extending above the level of the build plane 118 to waste container 128. The energy beams 136, 137 sinter or melt a cross sectional layer of the object being built under control of galvo scanners 132 and 133. The build plate 114 is then lowered and another layer of powder is spread over the part 122 being built, followed by successive melting/sintering of the powder by the lasers 120, 121. The process is repeated until the part 122 is completely built from the melted/sintered powder material.

As each layer of the part 122 is being built by the DMLM machine 100, the top most layer of the part being built at any given time is referred to herein as a build plane 118. As such, as each successive layer of the part 122 is being built, a layer of powder is spread over the current build plane 118 of the part 122.

The lasers 120, 121 may be controlled by a computer system including a processor and a memory. The computer system may determine a scan pattern for each layer and may control the lasers 120, 121 and the galvo scanners 132, 133 to irradiate the powder material according to the scan pattern. Each of the lasers 120, 121 may operate on a different portion of the build plate 114 and may be used to build different sections of the part 122. In embodiments, the laser 120 and the galvo scanner 132 may comprise a first laser channel 124, while the laser 121 and the galvo scanner 133 may comprise a second laser channel 125. The laser channels 124, 125 may also include mirrors, lenses, or other optical equipment to control the energy beams 136, 137.

After fabrication of the part 122 is complete, various post-processing procedures may be applied to the part 122. Post processing procedures may include removal of excess powder by, for example, blowing or vacuuming. Other post processing procedures may include a stress release process. Additionally, thermal and chemical post processing procedures may be used to finish the part 122.

In order for the part 122 to be built in multiple sections using the lasers 120, 121, the laser channels 124, 125 are desirably calibrated with respect to each other. That is, the laser strikes from the lasers 120, 121 desirably occur at expected locations on the build plane 118 of the part 122 such that the section of the part 122 built from the laser 120 and the section of the part 122 built from the laser 121 are properly aligned. If the calibration or alignment between the laser channels 124, 125 becomes disturbed, the sections of the part 122 built by the lasers 120 and 121 may not be properly aligned and material anomalies may occur in the part 122.

Accordingly, embodiments disclosed herein provide for in-situ detection for laser stitching alignment of the DMLM machine 100. In particular, embodiments disclosed herein provide for detection of alignment between the laser channels 124 and 125 of the DMLM machine 100. However, in other examples, embodiments disclosed herein may provide for the alignment of a DMLM machine having more than two laser channels.

In embodiments disclosed herein, a camera may capture images of the build plane 118 while the part 122 is being built. A stitch mask based on part-layer data may be overlaid with these images. The stitch mask and the images may be compared to identify, categorize, and quantify any misalignment between the lasers 120, 121 as disclosed herein.

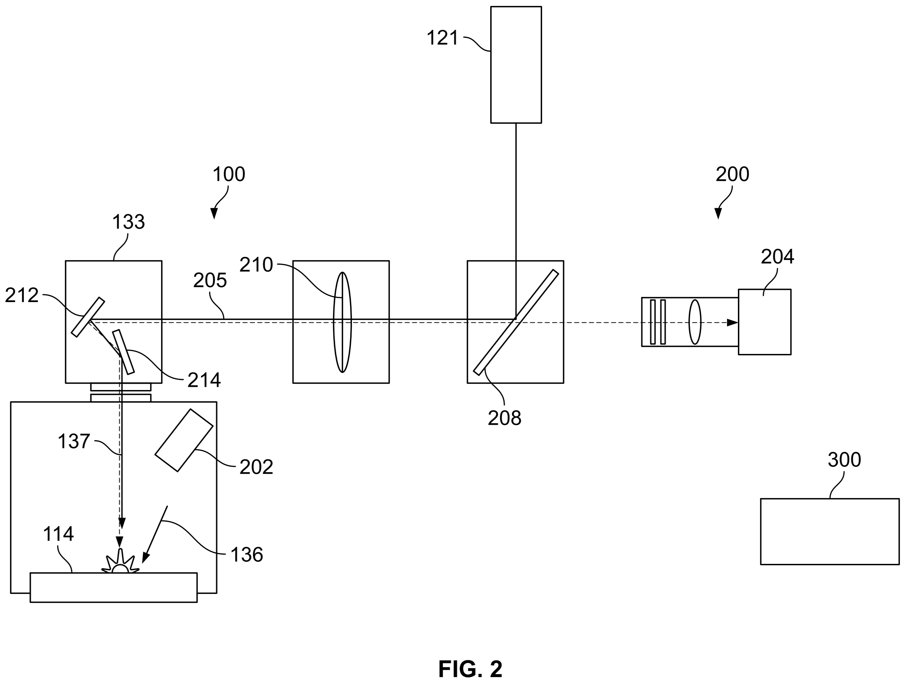

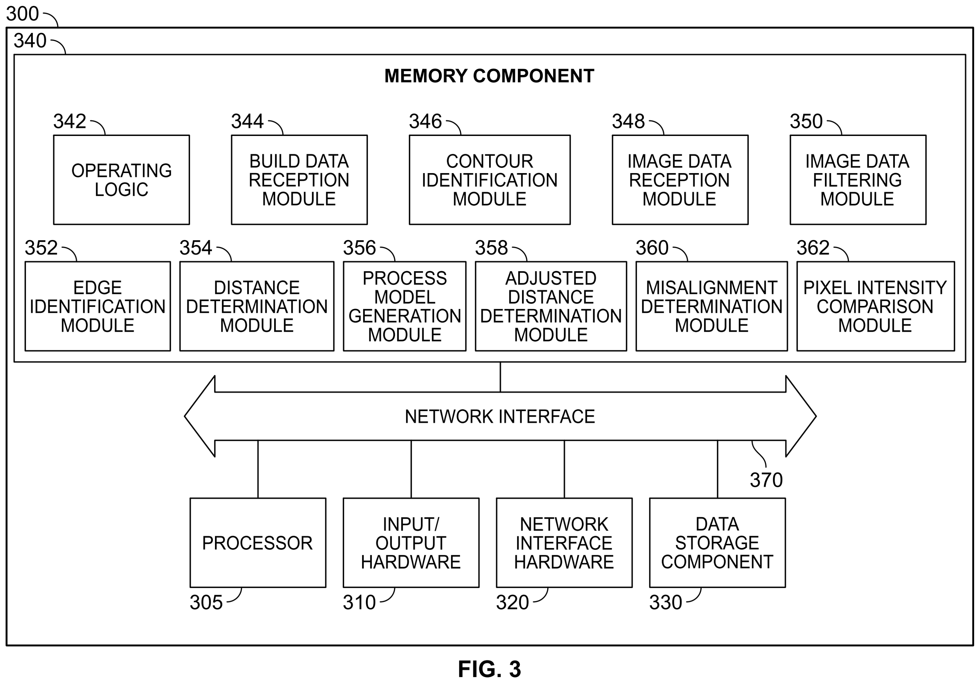

FIG. 2 shows a schematic diagram of a system 200 for in-situ field detection for laser stitching alignment, as disclosed herein. In the example of FIG. 2, the system 200 includes the DMLM machine 100 of FIG. 1 and a computing device 300, which is discussed in further detail below with respect to FIG. 3. The system 200 further includes a camera 202, and a photo diode 204. The camera 202 and the photo diode 204 may each contain multiple lens and other optical components. Furthermore, as shown in FIG. 2, the DMLM machine 100 also includes a laser deflection mirror 208, a focusing lens 210, and reflecting mirrors 212 and 214 within the galvo scanner 133.

In the example of FIG. 2, the laser 121 is positioned such that the energy beam 137 emitted by the laser 121 is deflected by the laser deflection mirror 208 through the focusing lens 210, which is then directed towards the DMLM machine 100. The energy beam 136 may also be emitted by the laser 120, as shown in FIG. 1. As such, the part 122, in the example of FIG. 1, may be built using the lasers 120, 121, as discussed above.

Also in the example of FIG. 2, the camera 202 is positioned to have a view of the build plane 118. As such, the camera 202 may capture images of the part 122. In addition, the energy beam 137 emitted by the laser 121 may cause light to reflect and/or scatter off of the build plane 118 of the part 122 and be directed by the galvo scanner 133 along the path 205 through the focusing lens 210 towards the laser deflection mirror 208. The light may then pass through laser deflection mirror 208 and travel to the photo diode 204. As such, both camera 202 and the photo diode 204 may capture an image and/or light intensities of the build plane 118 of the part 122.

In some examples, one of the camera 202 or the photo diode 204 may not be included in the system 200. In some examples, the system 200 may include other arrangements of the camera 202, the photo diode 204, and/or the laser 121 such that the camera 202 is able to capture images of the build plane 118 of the part 122. The data captured by the camera 202 and/or the photo diode 204 may be used to perform in-situ field detection for laser stitching alignment, as disclosed in further detail below.

The computing device 300 may receive and process data from the DMLM machine 100. In particular, the computing device 300 may receive build data and image data and process the data to identify and classify misalignment between the lasers 120, 121, as disclosed in further detail below.

Referring to FIG. 3, the computing device 300 may receive images captured by the camera 202 and/or light intensity data captured by the photo diode 204 and may determine whether the laser channels 124, 125 are misaligned with respect to each other, as disclosed herein. The components of the computing device 300 are schematically depicted. In some examples, the computing device 300 may be part of a DMLM machine, such as the DMLM machine 100 of FIG. 1. In other examples, the computing device 300 may be a stand-alone computing device or may be part of a computing device separate from the DMLM machine 100. In other examples, the computing device 300 may be within a system that includes the DMLM machine 100, such as the system 200 of FIG. 2.

As illustrated in FIG. 3, the computing device 300 may include one or more processors 305, input/output hardware 310, network interface hardware 320, a data storage component 330, and a non-transitory memory component 340. The memory component 340 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 340 may be configured to store one or more memory modules including operating logic 342, a build data reception module 344, a contour identification module 346, an image data reception module 348, an image data filtering module 350, an edge identification module 352, a distance determination module 354, a process model generation module 356, an adjusted distance determination module 358, a misalignment determination module 360, and a pixel intensity comparison module 362 (each of which may be embodied as a computer program, firmware, or hardware, as an example). A network interface 370 is also included in FIG. 3 and may be implemented as a bus or other interface to facilitate communication among the components of the computing device 300.

The processor 305 may include any processing component configured to receive and execute instructions (such as from the data storage component 330 and/or the memory component 340). The input/output hardware 310 may include a monitor, keyboard, mouse, printer, camera, microphone, speaker, touch-screen, and/or other device for receiving input and outputting information. The network interface hardware 320 may include any wired or wireless networking hardware, such as a modem, LAN port, wireless fidelity (Wi-Fi) card, WiMax card, mobile communications hardware, and/or other hardware for communicating with other networks and/or devices, such as the DMLM machine 100 of FIG. 1.

Referring still to FIG. 3, the data storage component 330 may store data received by the build data reception module 344 and/or the image data reception module 348. The data storage component 330 may also store model parameters generated by the process model generation module 356. The data storage component 330 may also store other data utilized by the computing device 300, as described herein.

Included in the memory component 340 are the operating logic 342, the build data reception module 344, the contour identification module 346, the image data reception module 348, the image data filtering module 350, the edge identification module 352, the distance determination module 354, the process model generation module 356, the adjusted distance determination module 358, the misalignment determination module 360, and the pixel intensity comparison module 362. The operating logic 342 may include an operating system and/or other software for managing components of the computing device 300.

The build data reception module 344 may receive build data associated with a part to be built by the DMLM machine 100 (e.g., the part 122 of FIG. 1). The build data received by the build data reception module 344 may indicate the shape of the part to be built by the DMLM machine 100. In particular, the build data may indicate the position of each laser strike on each layer for building the part 122. The build data reception module 344 may receive build data in any suitable format (e.g., common layer interface (CLI), computer-aided design (CAD), slide files, and the like). In the illustrated example, the part 122 as built using two lasers (e.g. lasers 120, 121). As such, the build data may indicate which laser is to perform each laser strike during building of the part 122.

The contour identification module 346 may identify a contour of the part 122 to be build based on the build data received by the build data reception module 344. As disclosed herein, a contour of the part 122 refers to the expected location of the outer edge of the part 122. As discussed above, the build data reception module 344 may indicate each laser strike on the build plane 118 to build the part 122. As such, the contour identification module 346 may identify the contour of the part 122 based on the build data. In particular, the contour identification module 346 may identify the contour of the part 122 to be built by each of the lasers 120, 121.

In actual operation, the actual edge of the part 122 may not perfectly match the contour of the part 122 due to laser misalignment and/or other sources of noise. In particular, the contour identification module 346 may identify the contour of each layer of the part 122 based on the build data. In embodiments, the difference between the contour of the part 122 and the actual edge of the part may be used to identify misalignment between the lasers 120, 121, as explained in further detail below.

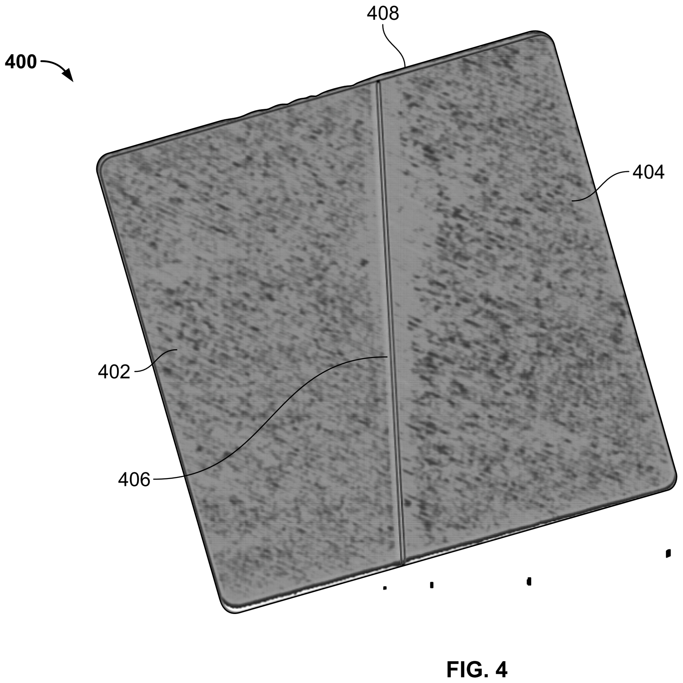

The image data reception module 348 may receive image data or other sensor data captured by the camera 202 and/or the photo diode 204. In other examples, the image data reception module 348 may receive data from other types of sensors that indicate the positions of lasers trikes on the build plane 118 of the part 122 while it is being built. The image data may be received by the image data reception module 348 in situ while each layer of the part 122 is being built in real-time. FIG. 4 shows an example image 400 that may be received by the image data reception module 348.

In the example of FIG. 4, a first portion 402 of the part 122 may be built by the laser 120 and a second portion 404 of the part 122 may be built by the laser 121. A stitch line 406 may indicate an overlapping portion that was struck with both lasers 120, 121. In a typical build file, the build data may include a small stitch line where a portion of a part to be built by a first laser overlaps with a portion of a part to be built by a second laser. This may allow for the part to be built without any gaps even if there is a small misalignment between the lasers. However, if there is significant misalignment between the lasers, the overlap between the lasers may be excessive or there may be a gap between the areas of the part built by the two lasers (e.g., the first portion 402 and the second portion 404). The misalignment may be determined using the techniques described herein.

Referring back to FIG. 3, the image data filtering module 350 may clean and filter the image data received by the image data reception module 348, as disclosed herein. The image data captured by the camera 202 or the photo diode 204 may have noise or artifacts due to the hardware, the environment, stochastic effects, or other sources. As such, captured images may be preprocessed or cleaned to improve the image quality before further analysis of the images.

In one example, the image data filtering module 350 may filter out intensity values below a threshold value. The image data received by the image data reception module 348 may include an intensity value for each pixel of an image for a particular layer of the part 122 being built. Particularly low intensity values may be caused by noise rather than signal. As such, in embodiments, the image data filtering module 350 may determine a distribution of intensity values for a received image. The image data filtering module 350 may then filter out intensity values for pixels below a predetermined threshold. That is, the image data filtering module 350 may set the intensity values for all pixels having an intensity below the predetermined threshold to zero. However, in other examples, the image data filtering module 350 may use other techniques to reduce noise in images received by the image data reception module 348.

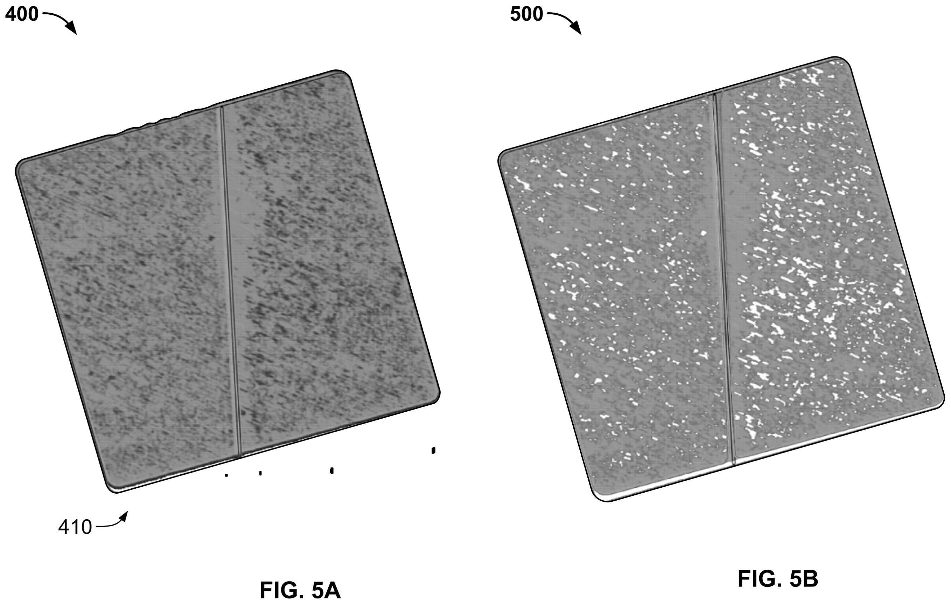

FIG. 5A shows the example image 400 that may be received by the image data reception module 348. As can be seen in the figure, the lower portion of the image 400 includes artifacts 410 that are outside of the part 122 being built. The artifacts 410 may be caused by noise during data collection. As such, the image data filtering module 350 may process the image 400 using the techniques described above to filter out intensity values below a predetermined threshold. FIG. 5B shows an example image 500, which is the image 400 of FIG. 5A after being processed by the image data filtering module 350. As can be seen in the image 500, the artifacts 410 from image 400 have been removed. As such, the denoised image 500 may be further analyzed to determine laser misalignment, as discussed in further detail below.

Referring back to FIG. 3, the edge identification module 352 may identify an edge of a layer of the part 122 based on a denoised image of the layer output by the image data filtering module 350. In particular, the edge identification module 352 may identify the pixel locations of an edge of a layer of the part 122 based on a denoised image of the layer. The edge identification module 352 may utilize a variety image processing techniques to identify the edge of the layer of the part (e.g., edge detection). After the edge of the layer of the part 122 is identified, the edge determined by the edge identification module 352 may be compared to the contour determined by the contour identification module 346, as discussed in further detail below.

Referring still to FIG. 3, the distance determination module 354 may determine a distance between the contour of the part identified by the contour identification module 346 and the edge of the part identified by the edge identification module 352 for each pixel of the edge, as disclosed herein. Referring back to FIG. 4, the image 400 shows the contour 408 overlaid on the image. As can be seen in FIG. 4, the contour 408 does not perfectly align with the edge of the part 122 or with the stitch line 406, indicating that there may be a misalignment between the lasers 120, 121. Accordingly, the distance determination module 354 may determine a distance between the build data and the image data, as disclosed herein.

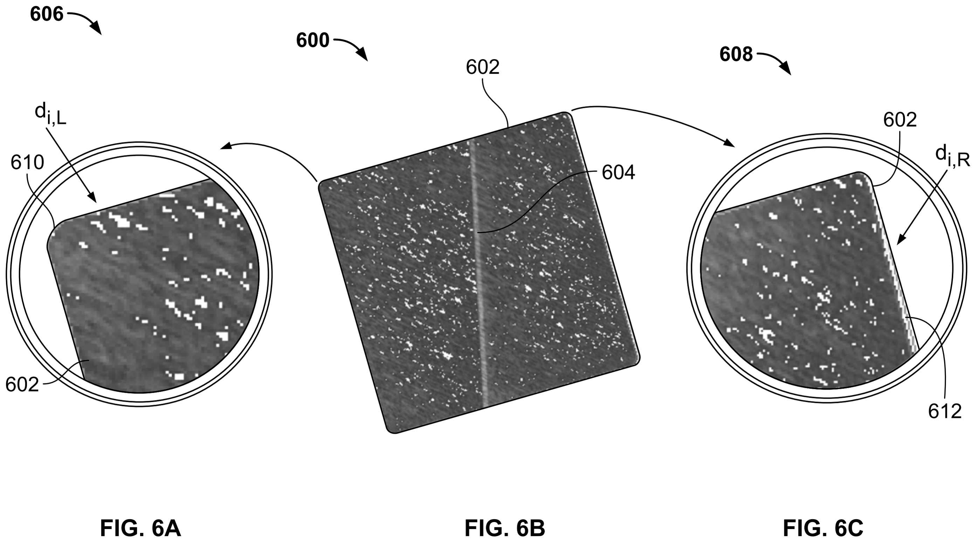

FIGS. 6A-6C show portions of an example image 600 of a layer of the part 122 captured in situ that may be received by the image data reception module 348 after processing by the image data filtering module 350. FIG. 6B shows the full image 600 overlaid with a contour 602 and a stitch line 604. FIG. 6A shows a magnified view 606 of the upper left portion of the image 600 and FIG. 6C shows a magnified view 608 of the upper right portion of the image 500. A portion of the contour 602 is shown in FIGS. 6A and 6C.

In embodiments, the distance determination module 354 may determine a distance between the contour of the part 122 and the edge the part 122. In particular, the distance determination module 354 may determine the shortest distance from the contour of the part 122 and the detected edge of the part 122 for each pixel of the edge of the part 122. The distance determination module 354 may determine this distance for the edge pixels of the first portion 402 and the second portion 404 of the part 122. If there is excess material, meaning that the edge of the part 122 extends beyond the contour of the part 122, this distance is positive. This is shown in FIG. 6A where an edge 610 of the image 600 extends beyond the contour 602. If there is a deficit of material or a gap, meaning that the contour of the part 122 extends beyond the edge of the part 122, this distance is negative. This is shown in FIG. 6c where the contour 602 extends beyond the edge 612 of the image 600.

In the example of FIG. 6A, the distance between the contour 602 and the detected edge 610 of the image 600 is labeled as *d_{i,L}*, which has a positive value because there is excess material in the image data compared to the build data. In the example of FIG. 6C, the distance between the contour 602 and the detected edge 612 of the image 600 is labeled as *d_{i,R}*, which has a negative value because there is a deficit of material in the image data compared to the build data. In embodiments, these two distances may be computed by the distance determination module 354.

Referring back to FIG. 3, the process model generation module 356 may determine a process model for the system 200, as disclosed herein. As the system 200 (FIG. 2) collects, ingests, and processes data (e.g., image data captured by the camera 202 and/or the photo diode 204), various sources of noise may be introduced. For example, noise may be introduced by the camera 202 or the photo diode 204, by the transmission of the data to the image data reception module 348, or by the processing performed by the image data filtering module 350, among other potential sources of noise. As such, the distances determined by the distance determination module 354 may be caused by noise rather than actual misalignment between the lasers 120, 121. Accordingly, these distances may be adjusted using the techniques described herein to account for these potential sources of noise.

In embodiments, the process model generation module 356 may generate a model to account for process variation indicating these various sources of noise. More particularly, for a particular part being built by the system 200, the process model generation module 356 may generate a model for each layer of the build, as different layers may have different amounts of noise and other process variations. After these models are generated, the distances determined by the distance determination module 354 may be adjusted based on these models, as described in further detail below.

Any process variation can comprise a combination of explained variation and unexplained variation. The explained variation is the error that can be accounted for by the model generation by the process model generation module 356, while the unexplained variation comprises residual error that is not accounted for by the model. More specifically, the process variation of the system 200 may comprise a sum of a function *f*(···) generated by the process model generation module 356 and residual error from the model. The function *f*(···) may be estimated as a machine learning model, as disclosed herein. While the residual error cannot be accounted for by the model generated by the process model generation module 356, it is assumed that this residual error is small enough to not significantly impair the performance of the model. In the presence of high residual error, a diagnostic test will highlight the need to re-evaluate the model.

In embodiments, it may be desired to determine the relative misalignment between the two lasers 120, 121. As such, to train the process model, the data from a portion of the part 122 built by one laser may be used to determine the reference process variation. It is assumed that any process variation affects the two portions of the part 122 built by the two lasers in a similar manner. Accordingly, the process model generation module 356 may determine a difference between the contour and the edge of a portion of the part 122 built by one laser. Because this portion of the part was built by only one laser, any difference between the contour and the edge of the part cannot have been caused by misalignment between the two lasers. As such, this difference may be used to determine the reference process variation model. This reference process variation model may then be applied to the image data from both portions of the part 122 printed by both lasers 120, 121 to determine adjusted data. This adjusted data may then be used to determine laser misalignment, as discussed in further detail below.

In the illustrated example, the process model generation module 356 determines the reference process variation model by considering the first portion 402 of the part 122 built by the laser 120 (which is the left portion in the illustrated example) for training the model. However, in other examples, the process model generation module 356 may determine the reference process variation by considering the second portion 404 of the part built by the laser 121 (which is the right portion in the illustrated example). Furthermore, in examples in which more than two lasers are used to build the part 122 in more than two sections, any particular section built by a single laser may be used to determine the reference process variation.

In embodiments, the reference process variation model for the first portion 402 of the part 122 may be considered to be a function $\hat{{f}_{L}} \left(⋯\right)$. Thus, the distance between the contour and the edge for the first portion 402 may be considered a sum of the reference estimated process variation effects and residual error. That is, ${d}_{i , L} = \hat{{f}_{L}} \left(⋯\right) + residual error$*.* As such, an adjusted distance may be determined by subtracting the estimated process variation effects from the determined distance. That is, ${d}_{i , L} - \hat{{f}_{L}} \left(⋯\right) = residual error$*.* Accordingly, an adjusted distance determined by subtracting the reference estimated process variation effects from the distance determined by the distance determination module 354 may account for all estimated sources of process variation except for any residual error unaccounted for by the process model.

In embodiments, the process model generation module 356 may generate the process model using machine learning techniques. In the illustrated example, the process model generation module 356 generates the process model using supervised learning techniques. However, in other examples, the process model generation module 356 may use other types of machine learning techniques. In the illustrated example, for each layer of the part 122, the process model generation module 356 may receive the filtered image data output by the image data filtering module 350 as input, and may determine the reference process variation model function $\hat{{f}_{L}} \left(⋯\right)$ such that the adjusted image data most closely matches the build data. The process model generation module 356 may determine a different reference process variation model function $\hat{{f}_{L}} \left(⋯\right)$ for each layer of the part 122.

Referring back to FIG. 3, the adjusted distance determination module 358 may determine adjusted distances based on the distances determined by the distance determination module 354 and the process model generated by the process model generation module 356. As discussed above, the distance determination module 354 may determine a shortest distance between the contour of the part 122, based on the build data, and the edge of the part 122, based on the image data, for each pixel of the edge of the part 122 for both the first portion 402 built by the laser 120 and the second portion 404 build by the laser 121, and for each layer of the part 122. As further discussed above, the process model generation module 356 may generate a process model for each layer of the part based on the build data and image data associated with the first portion 402 of the part 122. Thus, the distance determined by the distance determination module 354 associated with the second portion 404 of the part 122 is equal to the sum of the estimated process variation effects, the residual error, and any misalignment effect. That is, ${d}_{i , R} = \hat{{f}_{L}} \left(⋯\right) + misalignment effect + residual error$ *.* Thus, ${d}_{i , R} - \hat{{f}_{L}} \left(⋯\right) = misalignment effect + residual error$ *.*

Accordingly, the adjusted distance determination module 358 may determine adjusted distances by subtracting the estimated process variation effects from the distances determined by the distance determination module 354. These adjusted distances indicate the misalignment effect plus the residual error. Assuming that the residual error is small, these adjusted distances may be used to estimate the misalignment between the two lasers 120, 121, as discussed in further detail below. In embodiments, the adjusted distance determination module 358 may determine adjusted distances for the first portion 402 of the part 122 and the second portion 404 of the part 122.

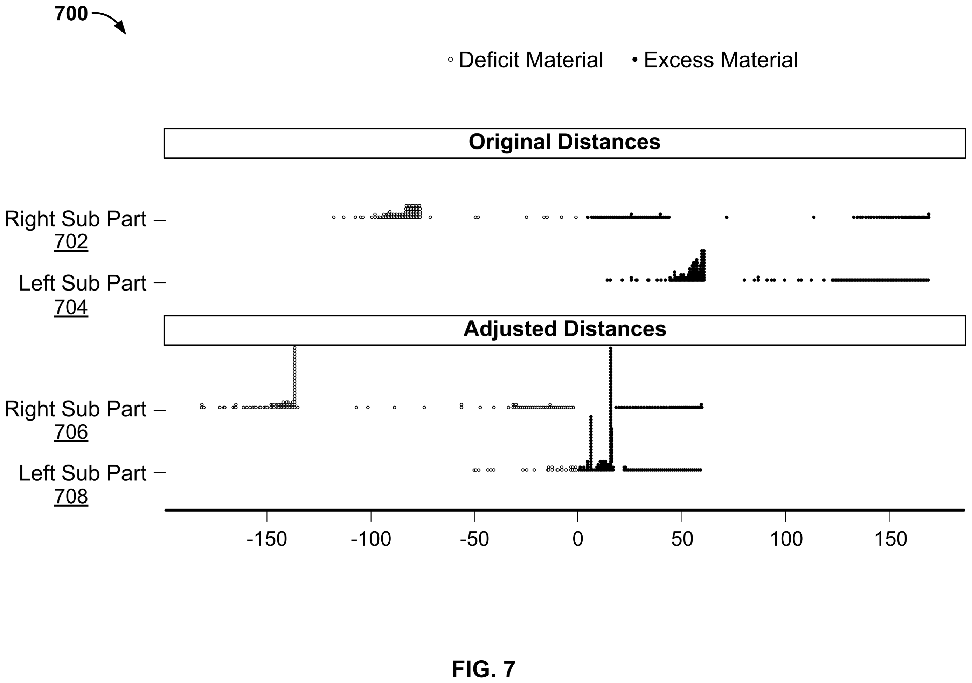

Referring back to FIG. 3, the misalignment determination module 360 may identify and quantify misalignment between the lasers 120, 121, as disclosed herein. FIG. 7 shows a histogram 700 of example data that may be used by the misalignment determination module 360. Row 702 of histogram 700 shows distance data associated with the second portion 404 of the part 122 that may be determined by the distance determination module 354. Row 704 of histogram 700 shows distance data associated with the first portion 402 of the part 122 that may be determined by the distance determination module 354. Row 706 of histogram 700 shows adjusted distance data associated with the second portion 404 of the part that may be determined by the adjusted distance determination module 358. Row 708 of histogram 700 shows adjusted distance data associated with the first portion 402 of the part that may be determined by the adjusted distance determination module 358.

As discussed above, the distance determination module 354 and the adjusted distance determination module 358 may determine distances and adjusted distances associated with each pixel of the edge of the part 122. As such, FIG. 7 plots the value of the distance and adjusted distance of each such pixel. As discussed above, positive distances correspond to excess material, and negative values correspond to a deficit of material. FIG. 7 shows distance values and adjusted distance values in a range from -200 µm to 200 µm. However, it should be understood that in other examples, the adjusted distances determined by the adjusted distance determination module 358 may have any other range of values.

As can be seen in row 708 of FIG. 7, the first portion 402 of the part 122 has a number of edge pixels with adjusted distances between -50 µm and 50 µm. However, because the image data associated with the first portion 402 of the part 122 was used to determine the process variation model, these adjusted distances represent a distribution of the residual errors. Furthermore, as can been in row 706 of FIG. 7, the adjusted distances associated with the second portion 404 of the part 122 are similar to the adjusted distances associated with the first portion 402. However, as can be seen in FIG. 7, there are a number of pixels associated with the second portion 404 of the part 122 around -150 µm that do not have corresponding values in the first portion 402 of the part 122. Because these adjusted distances are only present in the second portion 404 and not the first portion 402, this is likely due to misalignment between the two lasers 120, 121.

In embodiments, the misalignment determination module 360 may determine process limits associated with the adjusted distances determined by the adjusted distance determination module 358, as disclosed herein. The process limits may indicate a range or multiple ranges of adjusted distance values which are more likely to represent residual errors rather than laser misalignment. As shown in rows 706 and 708 of FIG. 7, a plurality of pixels on the edges of both the first portion 402 and the second portion 404 have values between -50 µm and 50 µm. As such, because these adjusted distances appear on both sides of the part 122, they are likely due to residual error, rather than relative misalignment between the lasers 120, 121. However, FIG. 7 also shows a plurality of adjusted distances around -150 µm associated only with the second portion 404 of the part 122. Because these adjusted distances are only found on the second portion 404, they are likely due to misalignment between the lasers 120, 121.

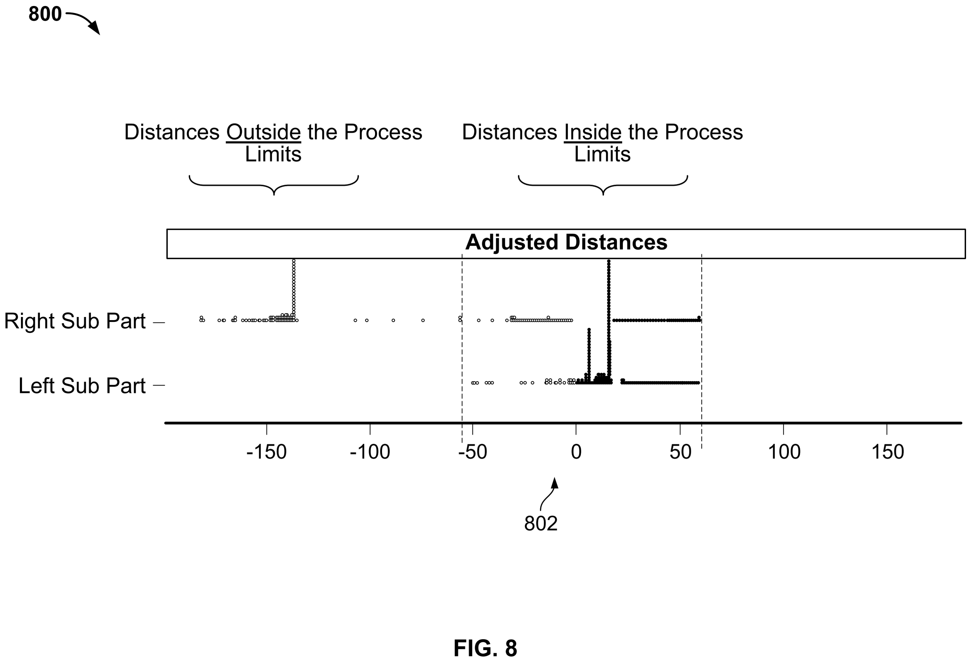

Accordingly, the misalignment determination module 360 may determine process limits indicating adjusted distance values likely caused by residual error rather than laser misalignment. In the illustrated example, the misalignment determination module 360 may determine a range of adjusted distances values associated with the first portion 402. For example, FIG. 8 shows a plot 800 containing the adjusted distance data from FIG. 7 along with process limit 802 ranging from about -55 µm to about 60 µm. The misalignment determination module 360 may then determine that the adjusted distances outside of the process limits associated with the second portion 404 are caused by laser misalignment, assuming that a predetermined threshold number of pixels is met.

The misalignment determination module 360 may determine a magnitude of laser misalignment based on the magnitudes of the adjusted distance values outside the process limits. In one example, the misalignment determination module 360 may determine a magnitude of laser misalignment based on an aggregate statistic associated with the adjusted distance values outside the process limits (e.g., based on an average of magnitudes of the adjusted distances).

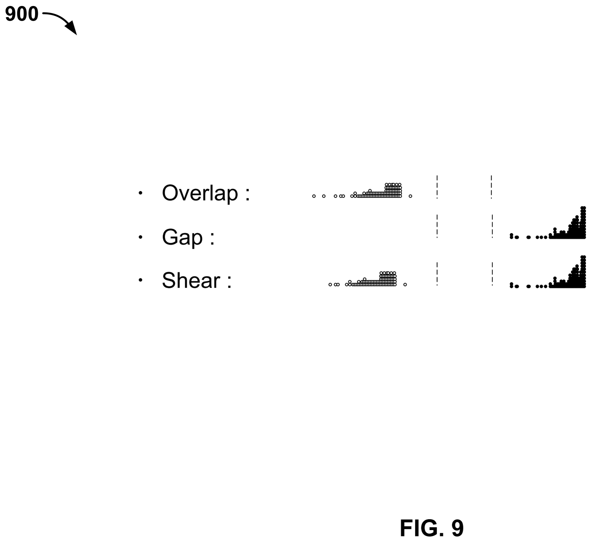

Furthermore, the misalignment determination module 360 may classify the type of misalignment, as disclosed herein. FIG. 9 shows example data indicating adjusted distance values outside of process limits 900. As shown in FIG. 9, if the adjusted distance values outside of the process limits 900 are negative, this indicates an overlap between portions of a part built by two different lasers. If the adjusted distance values outside of the process limits 900 are positive, this indicates a gap, meaning that there is a gap between portions of a part built by two different lasers. And if the adjusted distance values outside of the process limits 900 include positive and negative values, this indicates shear between portions of a part built by two different lasers.

Referring back to FIG. 3, the pixel intensity comparison module 362 may determine misalignment between the lasers 120, 121 using a different technique, as disclosed herein. In particular, the pixel intensity comparison module 362 may compare pixel intensity values of pixels of an image of a layer received by the image data reception module 348 within the stitch line 406 (FIG. 4) and pixel intensities within the immediate vicinity outside of the stitch line 406. As discussed above, the stitch line 406 represents a portion of the part 122 that was struck by both lasers 120, 121. As such, if the lasers 120, 121 are properly aligned, pixels within the stitch line 406 would have been struck by both lasers 120, 121, whereas pixels outside of the stitch line 406 would have been struck by only one laser. As such, the pixel intensities within the stitch line 406 are expected to be greater than the pixel intensities outside of the stitch line 406. However, if the lasers 120, 121 are misaligned, there may be some pixels just outside of the stitch line 406 that have greater intensity values and some pixels inside the stitch line 406 that have lower intensity values, for example.

In embodiments, the pixel intensity comparison module 362 may determine a first distribution of pixel intensities inside the stitch line 406 and a second distribution of pixel intensities within the immediate vicinity outside of the stitch line 406 based on data received by the build data reception module 344 and the image data reception module 348. The pixel intensity comparison module 362 may then compare the first distribution of pixel intensities inside the stitch line 406 and the second distribution of pixel intensities within the immediate vicinity outside of the stitch line 406 and determine whether there is a misalignment between the lasers 120, 121 based on the comparison.

In one example, the pixel intensity comparison module 362 may identify a first set of pixels that would have been struck by only one of the lasers 120 or 121, and a second set of pixels that would have been struck by both lasers 120, 121. The pixel intensity comparison module 362 may identify the first set of pixels and the second set of pixels based on the overlay of the build data on the image data. For each set of pixels, the pixel intensity comparison module 362 may compute the distribution of the intensity values and related distributional metrics of interest (e.g., high density intervals).

After identifying the first set of pixels and the second set of pixels, the pixel intensity comparison module 362 may determine whether there is misalignment between the lasers 120 and 121 based on the distribution of the first set of pixels and the second set of pixels. More specifically, a misalignment decision boundary may be computed based on the distributional metrics of interest previously computed for each set of pixels. In the absence of misalignment, it is expected that the sets of pixels are more precisely separated along the decision boundary. However, when the separation of the sets of pixels along the decision boundary is not clear cut, then the pixel intensity comparison module 362 may determine that the lasers 120, 121 are misaligned. Furthermore, the pixel intensity comparison module 362 may determine a type of misalignment based on a comparison of the shape and location of the distributions of the first set and second set of pixels. For example, the pixel intensity comparison module 362 may determine a different type of misalignment depending on whether there are pixels among the second set of pixels that appear to have been struck by both lasers 120, 121 to the left or to the right of the stitch line 406.

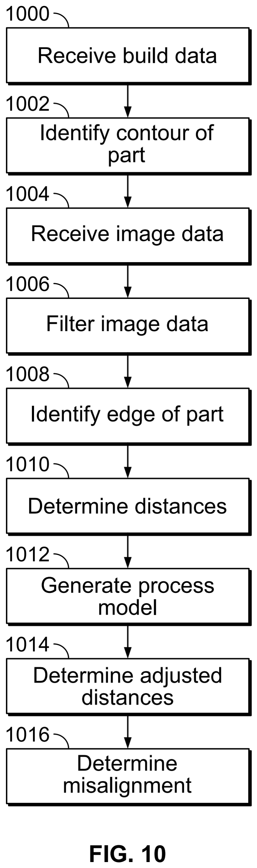

Referring now to FIG. 10, a flow chart is shown of an example method of operating the computing device 300 of FIGS. 2 and 3. The flow chart of FIG. 10 may be performed for each layer of the part 122 as it is built.

At step 1000, the build data reception module 344 receives build data associated with the part 122 to be built. As discussed above, the build data indicates the locations that the lasers 120, 121 are to strike the build plane 118 to build the part 122. The build data may be used to determine the contour of the part 122. At step 1002, the contour identification module 346 identifies the contour of the part 122 based on the received build data.

At step 1004, the image data reception module 348 receives image data of the part 122, captured by the camera 202 and/or the photo diode 204. The image data may be captured by the camera 202 and/or the photo diode 204 in situ, while the part 122 is being built.

At step 1006, the image data filtering module 350 filters the image data captured by the image data reception module 348. In particular, as discussed above, the image data filtering module 350 may determine a distribution of intensity values for pixels of the image data received by the image data reception module 348. The image data filtering module 350 may identify pixels of the image data having intensity values below a predetermined threshold. The image data filtering module 350 may then change the intensity values of the identified pixels to zero to generate filtered image data.

At step 1008, the edge identification module 352 identifies the edge of the part 122 based on the image data received by the image data reception module 348. In particular, the edge identification module 352 identifies the pixel locations of the edge of the part 122 based on the filtered image data.

At step 1010, the distance determination module 354 determines distances between the edge of the part 122 and the contour of the part 122. In particular, as discussed above, for each pixel of the edge of the part 122, the distance determination module 354 may determine a shortest distance to the contour of the part 122 based on the filtered image data.

At step 1012, the process model generation module 356 generates a process model, as discussed above. The generated process model may indicate process variation that affects distances determined by the distance determination module 354. The process model generation module 356 may generate the process model using machine learning techniques. A different process model may be generated for each layer of the part 122.

At step 1014, the adjusted distance determination module 358 determines adjusted distances based on the distances determined by the distance determination module 354 and the process model generated by the process model generation module 356. In particular, the adjusted distance determination module 358 may determine adjusted distances for each pixel of the edge of the part 122 by subtracting the process variation effects from the pixel intensity values.

At step 1016, the misalignment determination module 360 determines misalignment between the lasers 120, 121 based on the adjusted distances determined by the adjusted distance determination module 358. In particular, the misalignment determination module 360 may determine process limits comprising a range of adjusted distances associated with the first portion 402 of the part 122. The misalignment determination module 360 may determine a magnitude of misalignment between the lasers 120, 121 based on magnitudes of the adjusted distances outside of the process limits, assuming that a predetermined threshold number of pixels is met.

The misalignment determination module 360 may further classify the type of misalignment based on the adjusted distances outside of the process limits. In particular, if the adjusted distances outside of the process limits have negative values, the misalignment determination module 360 may determine that an overlap misalignment exists between the first and second portions 402, 404 of the part 122. If the adjusted distances outside of the process limits have positive values, the misalignment determination module 360 may determine that a gap misalignment exists between the first and second portions 402, 404 of the part 122. If the adjusted distance outside of the process limits have positive and negative values, the misalignment determination module 360 may determine that a shear misalignment exists between the first and second portions 402, 404 of the part 122.

In some examples, if the misalignment determination module 360 identifies misalignment between the lasers 120, 121 having a magnitude of misalignment greater than a predetermined threshold, the system 200 may transmit a warning to a user about the misalignment. This may allow the user to stop the build process and/or take corrective action. In some examples, if the misalignment determination module 360 identifies misalignment having a magnitude of misalignment greater than a predetermined threshold, the system 200 may automatically stop the build process of the part 122. This may allow a user to take corrective action and avoid unnecessarily wasting material on a faulty build.

In other examples, if the misalignment determination module 360 identifies misalignment between the lasers 120, 121, the system 200 may automatically take corrective action to realign the lasers, based on the type and magnitude of the misalignment. In particular, upon determination of a misalignment between the lasers 120, 121, the system 200 may transmit a signal to the DMLM machine 100 to cause one or both of the lasers 120, 121 to be moved, rotated, pivoted, angled, or otherwise adjusted such that the position of the beams 136, 137 emitted by the lasers 120, 121 impinging on the build plane 118 are more closely aligned for the purposes of counteracting the determined misalignment. For example, if an overlap misalignment is detected, the system 200 may transmit a signal to the DMLM machine 100 to cause one or both of the lasers 120, 121 to move further apart from each other. If a gap misalignment is detected, the system 200 may transmit a signal to the DMLM machine 100 to cause one or both of the lasers 120, 121 to move closer together. If a shear misalignment is detected, the system 200 may transmit a signal to the DMLM machine 100 to cause one or both of the lasers 120, 121 to move vertically in opposite directions with respect to each other to undo the shear misalignment.

In some examples, the system 200 may continually adjust the lasers 120, 121 as misalignment continues to be detected via a feedback loop or the like. For example, after the misalignment determination module 360 identifies a misalignment, the system 200 may adjust one or both of the lasers 120, 121 in a manner to counteract the misalignment. The misalignment determination module 360 may the make another determination as to whether a misalignment is detected. If a misalignment is again detected, the system 200 may further adjust one or both of the lasers 120, 121 in a manner to counteract the misalignment. As such, the system 200 may continually adjust one or both of the lasers 120, 121 in order to minimize or eliminate any misalignment between them.

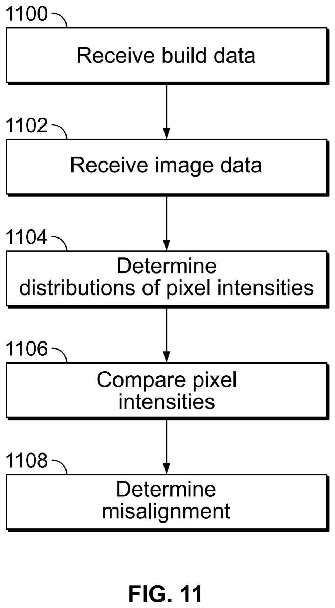

Referring now to FIG. 11, a flow chart is shown of another example method of operating the computing device 300 of FIGS. 2 and 3. The flow chart of FIG. 11 may be performed for each layer of the part 122 as it is built.

At step 1100, the build data reception module 344 receives build data associated with the part 122 to be built. At step 1102, the image data reception module 348 receives image data of the part 122, captured by the camera 202 and/or the photo diode 204.

At step 1104, the pixel intensity comparison module 362 determines a first distribution of pixel intensities inside the stitch line 406 and a second distribution of pixel intensities outside of the stitch line 406, as described above. At step 1106, the pixel intensity comparison module 362 performs a comparison between the first distribution of pixel intensities inside the stitch line 406 and the second distribution of pixel intensities outside of the stitch line 406. Then, at step 1108, the pixel intensity comparison module 362 determines whether there is misalignment between the lasers 120, 121 based on the comparison.

It should now be understood that devices, systems, and methods described herein provide in-situ field detection for laser stitching alignment for DMLM additive manufacturing using multiple lasers. Using the techniques described herein allows for automatic detection of relative misalignment between the multiple lasers used for DMLM additive manufacturing. Furthermore, the techniques described herein can determine a magnitude and type of misalignment between the lasers. As such, any such misalignment between the lasers can be detected while the part is being built. This may allow a user to take corrective action before the part is ruined due to the misalignment.

Further aspects of the disclosure are provided by the subject matter of the following clauses.

An apparatus, comprising one or more processors; one or more memory modules; and machine-readable instructions stored in the one or more memory modules that, when executed by the one or more processors, cause the apparatus to receive build data associated with a part to be built by an additive manufacturing machine using two or more lasers, wherein a first portion of the part is to be built by a first laser and a second portion of the part is to be built by a second laser; identify a contour of the part based on the build data; receive image data of a layer of the part while the part is being built by the additive manufacturing machine; identify pixel locations of an edge of the part based on the image data; determine distances between the pixel locations of the edge and the contour; and determine misalignment between the two or more lasers based on the determined distances.

The apparatus of any preceding clause, wherein the machine-readable instructions further cause the apparatus to determine a distribution of intensity values for pixels of the image data; based on the distribution of the intensity values, identify pixels of the image data having intensity values below a predetermined threshold; change the intensity values of the identified pixels to zero to generate filtered image data; and determine the distances between each pixel location of the edge and the contour based on the filtered image data.

The apparatus of any preceding clause, wherein the machine-readable instructions further cause the apparatus to determine a process model based on the determined distances between the pixel locations of the edge associated with the first portion of the part and the contour; determine adjusted distances based on the determined distances and the process model; and determine the misalignment between the two or more lasers based on the adjusted distances.

The apparatus of any preceding clause, wherein the instructions further cause the apparatus to determine the process model using machine learning techniques.

The apparatus of any preceding clause, wherein the distances are positive if there is excess material between the pixel locations of the edge and the contour, and the distances are negative if there is a deficit of material between the pixel locations of the edge and the contour.

The apparatus of any preceding clause, wherein the machine-readable instructions further cause the apparatus to determine process limits comprising a range of distance values between the pixel locations of the edge and the contour associated with the first portion of the part; and determine the misalignment between the two or more lasers based on distance values between the pixel locations of the edge and the contour associated with the second portion of the part outside of the process limits.

The apparatus of any preceding clause, wherein the machine-readable instructions further cause the apparatus to determine a magnitude of the misalignment between the two or more lasers based on magnitudes of the distance values between the pixel locations of the edge and the contour associated with the second portion of the part outside of the process limits.

The apparatus of any preceding clause, wherein the machine-readable instructions further cause the apparatus to determine a magnitude of the misalignment between the two or more lasers based on an average of magnitudes of the distance values between the pixel locations of the edge and the contour associated with the second portion of the part outside of the process limits.

The apparatus of any preceding clause, wherein the machine-readable instructions further cause the apparatus to determine that an overlap misalignment exists between the two or more lasers based on magnitudes of the distance values between the pixel locations of the edge and the contour associated with the second portion of the part outside of the process limits having positive values.

The apparatus of any preceding clause, wherein the machine-readable instructions further cause the apparatus to determine that a gap misalignment exists between the two or more lasers based on magnitudes of the distance values between the pixel locations of the edge and the contour associated with the second portion of the part outside of the process limits having negative values.

The apparatus of any preceding clause, wherein the machine-readable instructions further cause the apparatus to determine that a shear misalignment exists between the two or more lasers based on magnitudes of the distance values between the pixel locations of the edge and the contour associated with the second portion of the part outside of the process limits having positive values and negative values.

The apparatus of any preceding clause, wherein the machine-readable instructions further cause the apparatus to transmit a warning upon determination of the misalignment between the two or more lasers.

The apparatus of any preceding clause, wherein the machine-readable instructions further cause the apparatus to stop operating of the additive manufacturing machine upon determination of the misalignment between the two or more lasers.

The apparatus of any preceding clause, wherein the machine-readable instructions further cause the apparatus to take corrective action to realign the two more lasers upon determination of the misalignment between the two or more lasers.

A method comprising receiving build data associated with a part to be built by an additive manufacturing machine using two or more lasers, wherein a first portion of the part is to be built by a first laser and a second portion of the part is to be built by a second laser; identifying a contour of the part based on the build data; receiving image data of a layer of the part while the part is being built by the additive manufacturing machine; identifying pixel locations of an edge of the part based on the image data; determining distances between the pixel locations of the edge and the contour; and determining misalignment between the two or more lasers based on the determined distances.

The method of any preceding clause, further comprising determining a distribution of intensity values for pixels of the image data; based on the distribution of the intensity values, identifying pixels of the image data having intensity values below a predetermined threshold based on the distribution of the intensity values; changing the intensity values of the identified pixels to zero to generate filtered image data; and determining the distances between the pixel locations of the edge and the contour based on the filtered image data.

The method of any preceding clause, further comprising determining a process model based on the determined distances between the pixel locations of the edge associated with the first portion of the part and the contour; determining adjusted distances based on the determined distances and the process model; and determining the misalignment between the two or more lasers based on the adjusted distances.

The method of any preceding clause, further comprising determining the process model using machine learning techniques.

The method of any preceding clause, wherein the distances are positive if there is excess material between the pixel locations of the edge and the contour, and the distances are negative if there is a deficit of material between the pixel locations of the edge and the contour.

The method of any preceding clause, further comprising determining process limits comprising a range of distance values between the pixel locations of the edge and the contour associated with the first portion of the part; and determining the misalignment between the two or more lasers based on distance values between the pixel locations of the edge and the contour associated with the second portion of the part outside of the process limits.

The method of any preceding clause, further comprising determining a magnitude of the misalignment between the two or more lasers based on magnitudes of the distance values between the pixel locations of the edge and the contour associated with the second portion of the part outside of the process limits.

The method of any preceding clause, further comprising determining a magnitude of the misalignment between the two or more lasers based on an average of magnitudes of the distance values between the pixel locations of the edge and the contour associated with the second portion of the part outside of the process limits.

The method of any preceding clause, further comprising determining that an overlap misalignment exists between the two or more lasers based on magnitudes of the distance values between the pixel locations of the edge and the contour associated with the second portion of the part outside of the process limits having positive values; determining that a gap misalignment exists between the two or more lasers based on magnitudes of the distance values between the pixel locations of the edge and the contour associated with the second portion of the part outside of the process limits having negative values; and determining that a shear misalignment exists between the two or more lasers based on magnitudes of the distance values between the pixel locations of the edge and the contour associated with the second portion of the part outside of the process limits having positive values and negative values.

The method of any preceding clause, further comprising transmitting a warning upon determination of the misalignment between the two or more lasers.

The method of any preceding clause, further comprising stopping operation of the additive manufacturing machine upon determination of the misalignment between the two or more lasers.

The method of any preceding clause, further comprising taking corrective action to realign the two or more lasers upon determination of the misalignment between the two or more lasers.

An apparatus, comprising one or more processors; one or more memory modules; and machine-readable instructions stored in the one or more memory modules that, when executed by the one or more processors, cause the apparatus to receive build data associated with a part to be built by an additive manufacturing machine using two or more lasers, wherein a first portion of the part is to be built by a first laser and a second portion of the part is to be built by a second laser; receive image data of a layer of the part while the part is being built by the additive manufacturing machine; determine a first distribution of pixel intensities inside a stitch line associated with the part being built; determine a second distribution of pixel intensities outside of the stitch line associated with the part being built; perform a comparison between the first distribution and the second distribution; and determine misalignment between the two or more lasers based on the comparison.

## Claims

1. An apparatus (300), comprising:
one or more processors (305);
one or more memory modules (340); and
machine-readable instructions stored in the one or more memory modules (340) that, when executed by the one or more processors (305), cause the apparatus (300) to:
receive build data associated with a part (122) to be built by an additive manufacturing machine (100) using two or more lasers, wherein a first portion (402) of the part (122) is to be built by a first laser (120) and a second portion (404) of the part (122) is to be built by a second laser (121);
identify a contour of the part (122) based on the build data;
receive image data of a layer of the part (122) while the part is being built by the additive manufacturing machine (100);
identify pixel locations of an edge of the part (122) based on the image data;
determine distances between the pixel locations of the edge and the contour; and
determine misalignment between the two or more lasers based on the determined distances.

2. The apparatus (300) of claim 1, wherein the machine-readable instructions further cause the apparatus (300) to:
determine a distribution of intensity values for pixels of the image data;
based on the distribution of the intensity values, identify pixels of the image data having intensity values below a predetermined threshold;
change the intensity values of the identified pixels to zero to generate filtered image data; and
determine the distances between each pixel location of the edge and the contour based on the filtered image data.

3. The apparatus (300) of any preceding claim, wherein the machine-readable instructions further cause the apparatus to:
determine a process model based on the determined distances between the pixel locations of the edge associated with the first portion of the part (122) and the contour;
determine adjusted distances based on the determined distances and the process model; and
determine the misalignment between the two or more lasers based on the adjusted distances.

4. The apparatus (300) of any preceding claim, wherein:
the distances are positive if there is excess material between the pixel locations of the edge and the contour; and
the distances are negative if there is a deficit of material between the pixel locations of the edge and the contour.

5. The apparatus (300) of any preceding claim, wherein the machine-readable instructions further cause the apparatus to:
determine process limits comprising a range of distance values between the pixel locations of the edge and the contour associated with the first portion of the part (122); and
determine the misalignment between the two or more lasers based on distance values between the pixel locations of the edge and the contour associated with the second portion (404) of the part (122) outside of the process limits.

6. The apparatus (300) of claim 5, wherein the machine-readable instructions further cause the apparatus (300) to determine a magnitude of the misalignment between the two or more lasers based on magnitudes of the distance values between the pixel locations of the edge and the contour associated with the second portion (404) of the part (122) outside of the process limits.

7. The apparatus (300) of claim 5, wherein the machine-readable instructions further cause the apparatus (300) to determine a magnitude of the misalignment between the two or more lasers based on an average of magnitudes of the distance values between the pixel locations of the edge and the contour associated with the second portion (404) of the part (122) outside of the process limits.

8. The apparatus (300) of claim 5, wherein the machine-readable instructions further cause the apparatus (300 to determine that an overlap misalignment exists between the two or more lasers based on magnitudes of the distance values between the pixel locations of the edge and the contour associated with the second portion (404) of the part (122) outside of the process limits having positive values.

9. The apparatus (300) of claim 5, wherein the machine-readable instructions further cause the apparatus (300 to determine that a gap misalignment exists between the two or more lasers based on magnitudes of the distance values between the pixel locations of the edge and the contour associated with the second portion (404) of the part (122) outside of the process limits having negative values.

10. The apparatus (300) of claim 5, wherein the machine-readable instructions further cause the apparatus (300) to determine that a shear misalignment exists between the two or more lasers based on magnitudes of the distance values between the pixel locations of the edge and the contour associated with the second portion (404) of the part (122) outside of the process limits having positive values and negative values.

11. A method, comprising:
receiving (1000) build data associated with a part to be built by an additive manufacturing machine using two or more lasers, wherein a first portion of the part is to be built by a first laser and a second portion of the part is to be built by a second laser;
identifying (1002) a contour of the part based on the build data;
receiving (1004) image data of a layer of the part while the part is being built by the additive manufacturing machine;
identifying (1008) pixel locations of an edge of the part based on the image data;
determining (1010) distances between the pixel locations of the edge and the contour; and
determining (1016) misalignment between the two or more lasers based on the determined distances.

12. The method of claim 11, further comprising:
determining a distribution of intensity values for pixels of the image data;
based on the distribution of the intensity values, identifying pixels of the image data having intensity values below a predetermined threshold based on the distribution of the intensity values;
changing (1006) the intensity values of the identified pixels to zero to generate filtered image data; and
determining (1010) the distances between the pixel locations of the edge and the contour based on the filtered image data.

13. The method of any of claims 11-12, further comprising:
determining (1012) a process model based on the determined distances between the pixel locations of the edge associated with the first portion of the part and the contour;
determining (1014) adjusted distances based on the determined distances and the process model; and
determining (1016) the misalignment between the two or more lasers based on the adjusted distances.

14. The method of any of claims 11-13, further comprising:
determining (1012) process limits comprising a range of distance values between the pixel locations of the edge and the contour associated with the first portion of the part; and
determining (1016) the misalignment between the two or more lasers based on distance values between the pixel locations of the edge and the contour associated with the second portion of the part outside of the process limits.

15. The method of claim 14, further comprising:
determining that an overlap misalignment exists between the two or more lasers based on magnitudes of the distance values between the pixel locations of the edge and the contour associated with the second portion of the part outside of the process limits having positive values;
determining that a gap misalignment exists between the two or more lasers based on magnitudes of the distance values between the pixel locations of the edge and the contour associated with the second portion of the part outside of the process limits having negative values; and
determining that a shear misalignment exists between the two or more lasers based on magnitudes of the distance values between the pixel locations of the edge and the contour associated with the second portion of the part outside of the process limits having positive values and negative values.
